(19) Europäisches Patentamt
European Patent Office
Office européen des brevets

(11) EP 1 170 323 A2

(12) EUROPEAN PATENT APPLICATION

(43) Date of publication:
09.01.2002 Bulletin 2002/02

(51) Int Cl.$^7$: C08J 5/18

(21) Application number: 01305797.1

(22) Date of filing: 04.07.2001

(84) Designated Contracting States:
AT BE CH CY DE DK ES FI FR GB GR IE IT LI LU MC NL PT SE TR
Designated Extension States:
AL LT LV MK RO SI

(30) Priority: 05.07.2000 JP 2000203338

(71) Applicant: TORAY INDUSTRIES, INC.
Tokyo 103-8666 (JP)

(72) Inventors:
- Okazaki, Iwao
Kyoto 606-0912 (JP)
- Tsunashima, Kenji
Kyoto-shi, Kyoto 607-8075 (JP)
- Harada, Yutaka
Takatsuki-shi, Osaka 569-1115 (JP)

(74) Representative: Coleiro, Raymond et al
MEWBURN ELLIS York House 23 Kingsway
London WC2B 6HP (GB)

# (54) Thermoplastic resin film, process for production thereof and optical film

(57) A thermoplastic resin film includes at least a thermoplastic resin A having a glass transition temperature of equal to or higher than 150°C, an enthalpy relaxation temperature from 140°C to 200°C and an enthalpy relaxation magnitude from 0.01 to 2.0 kJ/mol. The film has a thickness equal to or more than 30 µm, a retardation less than or equal to 20 nm. Such a film can be used as a substrate of a liquid crystal display device.

EP 1 170 323 A2

## Description

The present invention relates to a thermoplastic resin film, to an optical film and to a process for producing the thermoplastic resin film.

Thermoplastic resin films are light in weight and resistant to cracking, and have been recently used in liquid crystal display devices for mobile data terminals. Demands have therefore been made to provide thermoplastic resin films that can be used as substrates of liquid crystal display device substrates for color display.

When such thermoplastic resins are used as substrates of liquid crystal display devices, they must have equivalent characteristics to those of conventional glasses. Such characteristics include, for example, colorlessness and transparency, high light transmittance, and other optical properties, heat resistance that can be resistant to processes such as lamination of transparent electrodes or oriented films, and thermal dimensional stability. Most of these characteristics are derived from the inherent characteristics of constitutional resins, and a variety of novel resins have been developed, such as norbornene-based polymers (e.g., US-A-2883372), and ring-opening polymers of dicyclopentadiene, and other alicyclic polyolefins.

However, the transparent electrodes formed on the substrates of liquid crystal display devices for color display must have lower resistance, and therefore the constitutive resins must have high thermal dimensional stability. Specifically, if the resins have insufficient thermal dimensional stability, and films having a thickness of equal to or more than 30 μm and being formed by melting of these resins are used as substrates of liquid crystal display devices, the formed transparent electrodes are peeled off or cracked and fail to achieve lower resistance. Additionally, these films must be somewhat thick, and such thick films become subject to curling when the resins are continuously formed into films and are wound.

Specifically, the present invention provides, according to a first aspect, a thermoplastic resin film comprising at least a thermoplastic resin A having a glass transition temperature of equal to or higher than 150°C, an enthalpy relaxation temperature of from 140°C to 200°C and an enthalpy relaxation magnitude of from 0.01 to 2.0 kJ/mol, the thermoplastic resin film having a thickness of equal to or more than 30 μm and a retardation of less than or equal to 20 nm.

According to a second aspect, the present invention provides a process for producing a thermoplastic resin film, which process comprises the steps of laminating a or a respective Layer B comprising a or a respective thermoplastic resin B on one or each respective surface of a Layer A comprising a thermoplastic resin A by melt coextrusion, the thermoplastic resin A having a glass transition temperature of equal to or higher than 150°C; preferably casting the resulting laminate into a film and peeling off the Layer B to thereby yield a thermoplastic resin film, which may have a thickness of equal to or more than 30 μm, a retardation of less than or equal to 20 nm, an enthalpy relaxation temperature of from 140°C to 200°C and an enthalpy relaxation magnitude of from 0.01 to 2.0 kJ/mol.

According to a third aspect, the present invention provides a laminate comprising a Layer $A^L$ comprising a thermoplastic resin $A^L$; and, on one or each respective surface of Layer $A^L$, a Layer C comprising a plurality of sub-layers, each sub-layer having a respective thermal expansion coefficient lower than the thermal expansion coefficient $\alpha$ of the thermoplastic resin $A^L$ of Layer $A^L$, the or each Layer C being laminated on the Layer $A^L$ in such a manner that the sub-layers of the or each Layer C have sequentially decreasing respective thermal expansion coefficients with increasing distance from Layer $A^L$.

Preferably, the laminate in accordance with the third aspect of the invention comprises a thermoplastic resin film in accordance with the first aspect.

In a preferred laminate in accordance with the third aspect of the invention, a Layer C is provided on each respective surface of Layer $A^L$ and each Layer C has a thermal expansion coefficient lower than that of Layer $A^L$.

In a more preferred laminate, Layer $A^L$ comprises a pair of sub-layers $A^{L1}$ and $A^{L2}$ of respective thermoplastic resins $A^{L1}$ and $A^{L2}$, which may be the same as or different from one another, wherein each of the plurality of sub-layers of each respective Layer C has a respective thermal expansion coefficient less than the thermal expansion coefficient of each of the thermoplastic resins $A^{L1}$ and $A^{L2}$ of the respective sub-layers $A^{L1}$ and $A^{L2}$ of Layer $A^L$.

According to a fourth aspect, the present invention provides a process for preparing a laminate, which process comprises laminating onto one or each respective surface of a Layer $A^L$ comprising a thermoplastic resin A a Layer C, the or each Layer C comprising a plurality of sub-layers, each sub-layer having a respective thermal expansion coefficient lower than the thermal expansion coefficient $\alpha$ of the thermoplastic resin $A^L$ of Layer $A^L$, the or each Layer C being laminated onto the Layer $A^L$ in such a manner that the sub-layers of the or each Layer C have sequentially decreasing respective thermal expansion coefficients with increasing distance from the Layer $A^L$.

It is especially preferred that such a process includes the preliminary step of preparing a thermoplastic resin Layer $A^L$ by laminating a or a respective Layer B comprising a or a respective thermoplastic resin B on one or each respective surface of a Layer A comprising a thermoplastic resin A by melt-coextrusion, the thermoplastic resin A having a glass transition temperature of equal to or higher than 150°C;

optionally casting the resulting laminate into a film; and
peeling off the or each Layer B, thereby to yield a thermoplastic resin film $A^L$.

According to other aspects, the present invention also provides an optical film having, as a substrate layer, a thermoplastic resin in accordance with the first aspect, or a laminate in accordance with a third aspect, of the invention and also provides the use of such an optical film or laminate as a substrate for a liquid crystal display.

Preferred embodiments of the invention will now be described.

Thermoplastic resin films embodying the present invention are advantageously used as optical films. The term "optical films" as used herein means and includes, films for use as members of display devices, such as substrates of liquid crystal display devices, polarizer-protective films, touch-screen supports, and polarizing plates. In particular, the thermoplastic resin films embodying the invention are advantageously used as liquid crystal display device substrates for mobile phone display screens, and personal computer display screens.

A thermoplastic resin film in accordance with a first aspect of the invention must be composed of at least a Layer A of thermoplastic resin A having a glass transition temperature of equal to or higher than 150°C. If the glass transition temperature is lower than 150°C, the resulting film may be deformed during the process for production of a liquid crystal display device, such as a process for forming a transparent electrode or oriented film. The thermoplastic resin films may further comprise other layers as described later within ranges not seriously impairing the properties providing the advantages associated with the present invention. The Layer A of thermoplastic resin A may also be a laminate of respective sub-layers $A^1$ and $A^2$ of thermoplastic resins $A^1$ and $A^2$ bonded together by an adhesive layer or by a third, melt extruded, thermoplastic resin $A^3$, again as described later.

In order that such a laminate may provide additionally a laminate in accordance with the third aspect of the invention defined above and explained in more detail later, then the Layer A, in order to constitute a Layer $A^L$, must have a thermal expansion coefficient greater than that of the other layers.

As the thermoplastic resin A of a Layer A or $A^L$, preferred are alicyclic polyolefins, polycarbonates, polyarylates, polysulfones and poly(ether sulfone)s, of which alicyclic polyolefins are typically preferred for their satisfactory optical properties. Examples of the alicyclic polyolefins include polymers containing a unit represented by following Formula (1) and/or Formula (2):

(1)

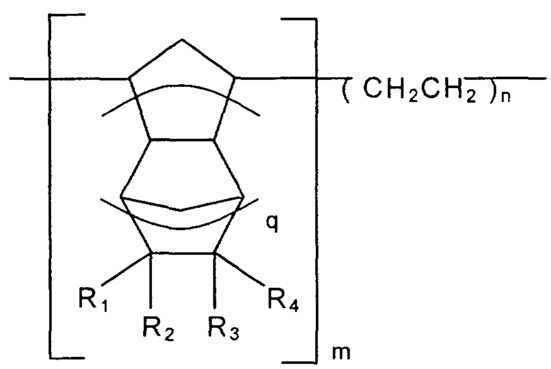

wherein each of $R_1$, $R_2$, $R_3$ and $R_4$ is independently a hydrogen atom, a hydrocarbon group, or a polar group such as a halogen atom or an ester, nitrile or pyridyl group, or, where $R_1$ and $R_2$, or $R_3$ and $R_4$, may be combined to form a ring; m is a positive integer; and each of n and q is independently 0 or a positive integer,

(2)

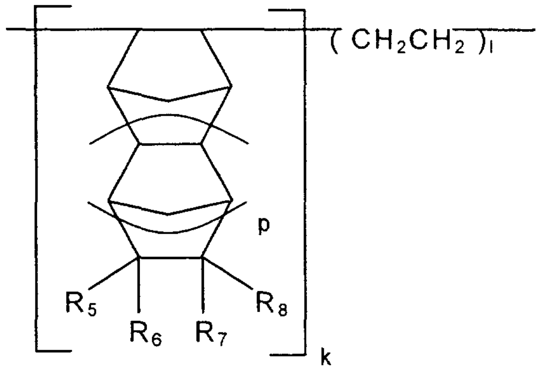

wherein each of $R_5$, $R_6$, $R_7$ and $R_8$ is independently a hydrogen atom, a hydrocarbon group, or a polar group, such as a halogen atom, an ester, nitrile, or pyridyl group, or where $R_5$ and $R_6$, or $R_7$ and $R_8$, may be combined to form a ring; k is a positive integer; and each of 1 and p is independently 0 or a positive integer.

Monomers from which polymers having a unit of Formula (1) are derived include norbornene and alkyl- and/or alkylidene-substituted derivatives thereof, such as 5-methyl-2-norbornene, 5,6-dimethyl-2-norbornene, 5-ethyl-2-norbornene, 5-butyl-2-norbornene, and 5-ethylidene-2-norbornene; dicyclopentadiene, 2,3-dihydrodicyclopentadiene, and methyl-, ethyl-, propyl-, butyl-, and other alkylsubstituted derivatives, and halogen- and other polar-group-substituted derivatives thereof; dimethanooctahydronaphthalene, and alkyl- and/or alkylidene-substituted derivatives and halogen- or other polar-group-substituted derivatives thereof, such as 6-methyl-1,4:5,8-dimethano-1,4,4a,5,6,7,8,8a-octahydronaphthalene, 6-ethyl-1,4:5,8-dimethano-1,4,4a,5,6,7,8,8a-octahydronaphthalene, 6-ethylidene-1,4:5,8-dimethano-1,4,4a,5,6,7,8,8a-octahydronaphthalene, 6-chloro-1,4:5,8-dimethano-1,4,4a,5,6,7,8,8a-octahydronaphthalene, 6-cyano-1,4:5,8-dimethano-1,4,4a,5,6,7,8,8a-octahydronaphthalene, 6-pyridyl-1,4:5,8-dimethano-1,4,4a,5,6,7,8,8a-octahydronaphthalene, and 6-methoxycarbonyl-1,4:5,8-dimethano-1,4,4a,5,6,7,8,8a-octahydronaphthalene; trimers and tetramers of cyclopentadiene, such as 4,9:5,8-dimethano-3a,4,4a,5,8,8a,9,9a-octahydro-1H-benzoindene, and 4,11:5,10:6,9-trimethano-3a,4,4a,5,5a,6,9,9a,10,10a,11,11a-dodecahydro-1H-cyclopentaanthracene. Polymers having units of Formula (1) may be prepared by polymerizing one or more of these monomers by ring-opening polymerization, and hydrogenating the resulting ring-opened polymer by a conventional hydrogenation technique.

To obtain a target hydrogenated product (a saturated polymer) of ring-opened polymer, which product has a glass transition temperature of equal to or higher than 150°C, the use of a tetramer or pentamer among these norbornene-based monomers or the combined use of the tetramer or pentamer with a bicyclic or tricyclic monomer is preferred. Specifically, a tetracyclic lower-alkyl-substituted or alkenyl-substituted derivative is preferably used as a base monomer to suppress birefringence.

Polymers having a unit of Formula (2) are polymers obtainable by addition polymerization of one or more of the norbornene-based monomers with ethylene, and/or hydrogenated products of these polymers. Polymers having units of Formula (2) are preferably wholly saturated polymers.

The alicyclic polyolefins may be copolymers prepared by adding a molecular weight modifier or by adding an additional monomer component as a minor component in the process for production of the polymers having a unit of Formula (1) and/or Formula (2). Such molecular weight modifiers include, for example, α-olefins such as 1-butene, 1-pentene and 1-hexene, and the additional monomer components include, for example, cyclopropene, cyclobutene, cyclopentene, cycloheptene, cyclooctene, 5,6-dihydrocyclopentadiene and other cycloolefins. Preferred alicyclic polyolefins are commercially available under the trade names of "ARTON" from JSR, "ZEONOR" and "ZEONEX" from Nippon Zeon Co., Ltd., and "APEL" from Mitsui Chemicals, Inc.

These alicyclic polyolefins have number average molecular weights within a range from 1 x $10^4$ to 30 x $10^4$, and preferably from 2 x $10^4$ to 20 x $10^4$, as determined by gel permeation chromatography (GPC) using cyclohexane as a solvent. When unsaturated bonds remaining in the molecular chain are saturated by hydrogenation, the degree of hydrogenation is preferably equal to or more than 90%, more preferably equal to or more than 95%, and typically preferably equal to or more than 99%. The resulting saturated polymer has improved thermal dimensionalstability.

The melt viscosity of the alicyclic polyolefins for use in the present invention is generally less than or equal to 1.5 x $10^4$ poises, preferably less than or equal to 1.0 x $10^4$ poises, and more preferably less than or equal to 0.8 x $10^4$ poises, as determined at a shear rate of 100 $sec^{-1}$ at 280°C. An alicyclic polyolefin having a melt viscosity within the above range has specifically satisfactory characteristics.

Each of these alicyclic polyolefins can be used alone or in combination in the present invention. Additionally,

alicyclic polyolefins of the same type but having different molecular weights may be used in combination as a blend. The alicyclic polyolefins may further comprise additives such as antioxidants, antistatic agents, lubricants, surfactants, and UV absorbers.

In accordance with a first aspect of the present invention, the film, which may be composed of the thermoplastic resin A or which may be a laminate, must have a thickness of equal to or more than 30 μm. The thickness is preferably equal to or more than 100 μm, and more preferably equal to or more than 200 μm. If the thickness is less than 30 μm, the resulting film has an insufficient rigidity and the film is deformed and has insufficient thermal dimensional stability in the process for production of a liquid crystal display device to thereby fail to yield a liquid crystal display device. The upper limit of the film thickness, at which the resulting film has good quality and can be commercially prepared, is preferably about 2000 μm. The film thickness can be controlled by various techniques, but is generally controlled by a metering pump such as a gear pump arranged in the piping for the polymer.

In accordance with the first aspect of the invention, the film, which may be composed of the thermoplastic resin A or which may be a laminate, must have a retardation of less than or equal to 20 nm. The retardation is preferably less than or equal to 15 nm, more preferably less than or equal to 10 nm, and typically preferably less than or equal to 5 nm. A film having a retardation within the above range is free from uneven color and is colorless and transparent even when it is used as a substrate of a liquid crystal display device for color display. The lower limit of the retardation is 0 nm. The term "retardation" means the in-plane anisotropy of refractive index and is defined as the product of the difference between refractive indexes in directions perpendicular to each other in the plane and the film thickness.

In a process suitable for the production of a Layer A or $A^L$ of thermoplastic resin of a film in accordance with the first aspect of the invention or of a laminate in accordance with a third aspect of the invention respectively, a film composed of a thermoplastic resin B (hereinafter referred to as "Layer B") is preferably laminated at least on one side of a film composed of the thermoplastic resin A (hereinafter referred to as "Layer A") in such a manner that Layer B can be peeled off from Layer A. The thermoplastic resin A preferably has a high melt viscosity, so that the film often exhibits an excessively high retardation when the film is formed by a melting film-formation technique. However, surprisingly, we find that the lamination of a Layer A comprised of thermoplastic resin A with a film or films comprised of a thermoplastic resin B can decrease retardation. Although not wishing to be bound by theory, it is believed that firstly, the severe shear experienced during extrusion of a film is experienced mainly at the surface, the core remaining optionally isotropic. Thus, the greater extent of anisotropy is confined mainly to the thermoplastic film or films B of the laminate, which, however, are peeled off to provide a Layer A having greater isotropy. Secondly, the protective film or films of thermoplastic resin B allow(s) a more gradual cooling of the Layer A after extrusion, so that the Layer A is not subject to drastic changes in its thermal condition. This can be ascertained by flow analysis on melting.

The solution film-formation technique using a solvent is advantageous in this point, but the solvent must be removed by, for example, drying and the film-formation rate cannot therefore be increased in the solution film-formation. This technique is therefore disadvantageous having regard to productivity.

Additionally, the lamination of Layer B can avoid surface defects such as die lines and adhered dust. Layer A and Layer B are preferably laminated in a die or in an adapter during melting and are then co-extruded. To stably cast the melted and co-extruded polymers, Layer A and Layer B are preferably laminated uniformly in the width direction except for the edges of the film. The thickness of Layer B is preferably equal to or more than 2 μm and more preferably equal to or more than 10 μm to achieve lower retardation. The upper limit of the thickness of Layer B for general use is preferably 100 μm, from the viewpoints of rigidity and other properties of film. The peel force between Layers A and B is preferably equal to or more than 0.05 g/cm and less than 100 g/cm, and more preferably equal to or more than 0.2 g/cm and less than 50 g/cm. If the peel force is equal to or more than 100 g/cm, Layer B cannot be easily peeled off, and if it is less than 0.05 g/cm, the two layers may be peeled off from each other in the film-formation process. The peel force depends on the crystallinity and the degree of crystallinity of the laminated resins used.

The thermoplastic resins B for use in the present invention are preferably polyesters or polycarbonates, from the viewpoint of peeling property from the thermoplastic resin A. Among such polyesters, polyesters containing, as a main component, poly(ethylene terephthalate), poly(ethylene naphthalate), poly(ethylene isophthalate) or poly(propylene terephthalate) are preferred, of which polyesters containing poly(ethylene terephthalate) as a main component are specifically preferred.

The term "main component" means that the component in question occupies 80% by weight or more of the polymer, and the polymer may be a copolymer or blend with a third component, as far as the third component occupies less than 20% by weight of the polymer. Dicarboxylic acid components for use as comonomers include, but are not limited to, terephthalic acid, isophthalic acid, 2,6-naphthalenedicarboxylic acid, adipic acid, trimethyladipic acid, sebacic acid, malonic acid, dimethylmalonic acid, succinic acid, glutaric acid, pimelic acid, 2,2-dimethylglutaric acid, azelaic acid, fumaric acid, maleic acid, itaconic acid, 1,3-cyclopentanedicarboxylic acid, 1,2-cyclohexanedicarboxylic acid, 1,4-cyclohexanedicarboxylic acid, 1,4-naphthalic acid (1,4-naphthalenedicarboxylic acid), diphenic acid, 4,4'-hydroxybenzoic acid, and 2,5-naphthalenedicarboxylic acid.

Among these dicarboxylic acids, isophthalic acid, naphthalene dicarboxylic acids, cyclohexanedicarboxylic

acids and diphenylethanedicarboxylic acid are preferred. Diol components for use as comonomers include ethylene glycol, diethylene glycol, polyethylene glycol, propylene glycol, polypropylene glycol, 1,3-propanediol, 1,3-butanediol, 1,4-butanediol, 1,5-pentanediol, 1,6-hexanediol, 1,7-heptanediol, 1,8-octanediol, 1,9-nonanediol, 1,10-decanediol, 2,4-dimethyl-2-ethylhexane-1,3-diol, neopentyl glycol, 2-ethyl-2-butyl-1,3-propanediol, 2-ethyl-2-isobutyl-1,3-propanediol, 3-methyl-1,5-pentanediol, 2,2,4-trimethyl-1,6-hexanediol, 1,2-cyclohexanedimethanol, 1,3-cyclohexanedimethanol, 1,4-cyclohexanedimethanol, 2,2,4,4-tetramethyl-1,3-cyclobutanediol, 4,4'-thiodiphenol, bisphenol A, 4,4'-methylenediphenol, 4,4'-(2-norbornylidene)diphenol, 4,4'-dihydroxybiphenol, o-, m-, and p-dihydroxybenzenes, 4,4'-isopropylidenephenol, 4,4'-isopropylidenebis(2,6-dichlorophenol), 2,5-naphthalenediol, p-xylenediol, cyclopentane-1,2-diol, cyclohexane-1,2-diol, and cyclohexane-1,4-diol. Of these diols, propylene glycol, tetramethylene glycol and cyclohexanedimethanols are preferably used.

The polyester may further comprise p-hydroxybenzoic acid and other hydroxycarboxylic acids as a comonomer component, in addition to the dicarboxylic acid component and diol component. Additionally, the above-exemplified polyesters have a linear structure, but they may be branched polyesters prepared by using an ester-forming component with 3 or higher valency. Polymers constituting blends for use in the present invention include, for example, the polyesters, polyester copolymers (copolyesters), polycarbonate resins, acrylic resins and polyolefin resins.

The polyester for use as the thermoplastic resin B in preparing a film embodying the present invention has an intrinsic viscosity of preferably equal to or more than 0.55 dl/g and more preferably equal to or more than 0.6 dl/g. The use of a polyester having an intrinsic viscosity within this range improves flowability upon melting to thereby decrease retardation, and avoids the turn-around of the resin to the edges of the film to thereby yield a uniformly laminated film.

The thermoplastic resin B for use in a process embodying the present invention may further comprise inactive particles. Such inactive particles include, for example, particles of silica, alumina, calcium carbonate, calcium phosphate, barium sulfate, magnesium oxide, zinc oxide, or titanium oxide, and other inorganic particles; and crosslinked polystyrene particles, acrylic particles, and other organic polymer particles. Additionally, the thermoplastic resin B may further comprise various additives according to necessity. Such additives include, for example, flame retarders, thermostabilizers, plasticizers, antioxidants, UV absorbers, antistatic agents, pigments, and organic lubricants such as fatty acid esters and waxes. Each of these additional components can be used alone or in combination.

The thermoplastic resin A for use in a film in accordance with a first aspect of the present invention has an enthalpy relaxation temperature of from 140°C to 200°C and preferably from 145°C to 190°C, and an enthalpy relaxation magnitude of from 0.01 to 2.0 kJ/mol, preferably from 0.02 to 2.0 kJ/mol, and more preferably from 0.05 to 1.5 kJ/mol. After intensive investigations, we find that, when a film composed of the thermoplastic resin A is aged so that the enthalpy relaxation temperature and enthalpy relaxation magnitude fall within the above ranges, the resulting film has a sufficient thermal dimensional stability as an optical film such as a substrate of a liquid crystal display device. If the enthalpy relaxation magnitude of the thermoplastic resin A is less than 0.01 kJ/mol, the amorphous structure is insufficiently relaxed to thereby fail to yield satisfactory thermal dimensional stability. In contrast, a practically excessively long aging treatment is required to achieve the enthalpy relaxation magnitude exceeding 2.0 kJ/mol.

The ageing treatment is preferably performed at temperatures equal to or higher than [(the glass transition temperature) - 30°C] and less than or equal to the glass transition temperature and preferably for equal to or more than 30 minutes, and more preferably equal to or more than 2 hours, and less than or equal to about 96 hours. The closer the aging temperature is to the glass transition temperature, the faster the enthalpy is relaxed. Additionally, the aging treatment can also decrease retardation and mitigate curling of the film when the resulting laminate is wound.

After obtaining Layer A covered by Layers B on both sides, Layers B are peeled off, and optionally after ageing, Layer A is then used as a substrate.

Alternatively, prior to any optional ageing step, at least one additional layer may be formed at least on one surface of the Layer A to form a laminate. The laminate may then be aged at a temperature lower than or equal to the glass transition temperature of the laminate, preferably under the conditions set out above for Layer A. Conveniently, prior to ageing, the laminate may be cut to a sheet before ageing.

Irrespective of whether or not such a laminate is aged, the or each additional layer may be selected for lamination in such a manner that the or each layer has a or a respective thermal expansion coefficient lower than the thermal expansion coefficient $\alpha$ of the thermoplastic resin A of Layer A and that, where a plurality of additional layers is formed at least on one surface of the Layer A, the layers form sequentially decreasing respective thermal expansion coefficients with increasing distance from the Layer A, thereby providing a laminate which comprises a Layer $A^L$ comprising a thermoplastic resin $A^L$ and, on one or each respective surface of Layer $A^L$, a Layer C comprising a plurality of sub-layers provided by the respective additional layers, thereby providing a laminate in accordance with the third aspect of the invention. Such a laminate is especially useful as a substrate (or part thereof) in an optical article.

Preferred films, whether constituting a film in accordance with a first aspect of the invention or a laminate in accordance with the third aspect or both are now described.

For use as an optical film such as a substrate of a liquid crystal display device, a polarizer-protective film, a

touch-screen support or a polarizing plate, Layer A or $A^L$ preferably has gas barrier property that is resistant to oxygen and water vapor permeation, and abrasion resistance to protect the surface from scratching. To this end, where necessary, one or more additional layer(s) constituting a gas barrier layer, hard coat layer or both may be laminated on the surface of Layer A after peeling off Layers B. Where each of a gas barrier layer and a hard coat layer are present on the same surface of a Layer A, the hard coat layer may be the outer layer.

Alternatively or additionally, other layers such as an adhesive layer or other functional layer, for example, layers together having optical properties such as a transparent electrode for a liquid crystal display device, may be laminated onto Layer A or $A^L$.

Each such additional layer is referred to hereinafter as a "Layer $C_S$".

To enhance the adhesion of Layer $C_S$ to Layer A, the surface of Layer A is very preferably subjected to at least one surface activation treatment prior to the lamination of Layer $C_s$. Such surface activation treatments include plasma treatment, corona discharge, treatment with chemicals, surface-roughening treatment, etching and flame treatment.

The gas barrier layer may be a poly(vinyl alcohol) film or a transparent vapor deposition layer such as a silica layer or alumina layer. The gas barrier layer should have moisture resistance, resistance to alkalinity, resistance to acidity, and other properties to achieve satisfactory gas barrier property. Accordingly, the gas barrier layer is preferably prepared by adding a large amount of inorganic fine particles such as silica having an average particle size of from about 5 to about 25 nm to an organic polymeric compound, and crosslinking the resulting layer of organic polymer by heat or electron beam, or by laminating the crosslinked organic polymer layer onto a transparent vapor deposition layer. Such fine particles are preferably silica sol, antimony oxide sol, titania sol, alumina sol, zirconia sol or tungsten oxide sol. The particles may have an average particle size of from 1 to 300 nm, preferably from 5 to 100 nm, and more preferably from 10 to 50 nm, for use as a transparent film. The content of these particles falls within a range of preferably from 10 to 85% by weight and more preferably from 35 to 70% by weight. These layers may further comprise surfactants.

Preferably, a hard coat layer is then formed on the gas barrier layer. In this case, organic polymers constituting the hard coat layer include epoxy resins, acrylic resins, urethane resins, urea resins, melamine resins and modified derivatives thereof. Additionally, a hard coat composition to form the hard coat layer preferably comprises from about 50 to about 85% by weight of inorganic oxides such as silica each having an average particle size of from about 10 to about 50 nm. The hard coat layer is formed by applying, as the hard coat composition, a water-alcohol dispersion containing the organic polymer, the inorganic oxide and, according to necessity, a catalyst such as an aluminum chelate compound as a crosslinking agent on the gas barrier layer, and crosslinking the applied layer by, for example, heat, electron beam or radiation to thereby form a hard coat layer of a hardness of 3H or more.

Layer $C_s$ preferably has a thermal expansion coefficient $\alpha_2$ lower than the thermal expansion coefficient $\alpha_1$ of Layer A. The thermal expansion coefficient $\alpha_2$ of Layer $C_s$ is preferably from 30 to 15 (x $10^{-6}/^\circ C$), which is lower than that of Layer A and higher than that of an inorganic layer such as a transparent electrode layer formed on Layer $C_S$. In this connection, an organic layer such as Layer A generally has a high thermal expansion coefficient, and an inorganic layer such as transparent electrode layer generally has a low thermal expansion coefficient.

Each Layer $C_s$ comprises a single layer, a plurality of which layers $C_s$ such as two or three layers may together form a Layer C. For example, Layer C may have a two-layer structure composed of a layer having a thermal expansion coefficient of from about 30 to about 15 (x $10^{-6}/^\circ C$) and a layer having a thermal expansion coefficient of from about 20 to about 10 (x $10^{-6}/^\circ C$). Generally, an organic layer has a high thermal expansion coefficient, and an inorganic layer has a low thermal expansion coefficient, and Layer C may be preferably composed of gradient materials that mitigate the difference of thermal expansion coefficients.

Layer C can be formed by adding large amounts of an inorganic substance into an organic polymeric compound, applying the resulting composition onto the surface of Layer A to thereby form an organic polymer layer containing inorganic substance, and crosslinking the organic polymer layer. Layer C as a gas barrier layer can be formed, for example, in the following manner. Initially, an inorganic oxide having an average particle size of from about 5 to about 25 nm, such as silicon oxide, is added in a proportion of from about 30 to about 65% by weight to a water-alcohol dispersion of a gas barrier organic polymer such as a poly(vinyl alcohol) (PVA), a polyamide (PA) or modified derivative thereof, and additionally, a crosslinking agent such as aluminum chelate compound or another catalyst is added to the dispersion, and the resulting dispersion is applied onto Layer A, and is crosslinked by, for example, heat, electron beam or radiation. The coating technique can be selected from among rotogravure roll coating, metering bar coating, die coating, dipping and other coating processes, depending on the absolute viscosity and the shearing property in viscosity of the coating composition. The applied coating composition can be dried by conventional floating drying process, and the resulting layer may be subjected to knurling to form projections and depressions at edges in the winding operation.

Additionally, an organic polymer layer having a thermal expansion coefficient $\alpha_2$ of from about 20 to about 10 (x $10^{-6}/^\circ C$) containing an inorganic substance can be formed as a hard coat layer by coating in the same manner as above. As organic polymers constituting the hard coat layer, preferred are epoxy resins, acrylic resins, urethane resins, urea resins, melamine resins and modified derivatives thereof. A hard coat composition to form the hard coat layer

may be a water-alcohol dispersion containing the organic polymer, from about 50 to about 85% by weight of an inorganic compound having an average particle size of from about 10 to about 50 nm such as silicon oxide or another metal oxide, and a crosslinking agent such as an aluminum chelate compound or another catalyst. The hard coat composition is applied onto the gas barrier layer, and is crosslinked by heat, electron beam or radiation to thereby form a hard coat layer. The coating technique can be selected from among rotogravure roll coating, metering bar coating, die coating, dipping and other coating processes, depending on the absolute viscosity and the shearing property in viscosity of the coating composition. The applied coating composition can be dried by conventional floating drying process, and the resulting film may be subjected to knurling to form projections and depressions at edges in winding operation.

Sub-layers of Layer A of the thermoplastic resin A may be bonded to thereby yield a single substrate. For example, at least one of a first gas barrier layer and a first hard coat layer may be formed on one surface of a first sub-layer $A^1$ and at least one of a second gas barrier layer and a second hard coat layer may be formed on one surface of a second layer $A^2$ to yield first and second plies and respective free surfaces of the first and second plies may be bonded to one another to form a two-ply laminate having a Layer A comprising sub-layers $A^1$ and $A^2$.

The techniques for bonding the plies to one another include a process in which a sub-layer $A^1$ or $A^2$ of Layer A composed of an organic resin having a thermal expansion coefficient $\alpha_1$ is subjected to a surface activation treatment such as plasma treatment, corona discharge, treatment with a chemical agent, surface roughening treatment, etching, or flame treatment, and two treated surfaces together or a treated surface and a non-treated surface are bonded by thermocompression; a process in which an adhesive is applied onto at least one, and preferably two, plies of Layer A and the two plies are then bonded with each other; and a process in which a layer of a polymer substantially the same as the thermoplastic resin A is rendered molten and extruded into a space between two plies of Layer A, and these three layers are bonded with each other by thermocompression. The surface activation process, in which Layer A is subjected to a surface activation treatment, is preferred, from the viewpoints of productivity and quality of the resulting product. When a plurality of plies of Layer A each providing a sub-layer are bonded with each other to form a multilayer laminate embodying the invention, the bonded plurality of plies of Layer A are regarded as one Layer A in a film embodying the invention.

Next, a process for producing a thermoplastic film embodying a first aspect of the invention and a laminate embodying a second aspect of the invention will now be illustrated with reference to an example below.

Initially, low molecular weight fractions having a molecular weight of less than 100, such as water, volatile substances, and decomposed substances are removed from the thermoplastic resin A thereby to control the content of these low molecular weight fractions to preferably less than or equal to 0.05% by weight, and the resulting thermoplastic resin A is fed to an extruder and is melted. Separately, low molecular weight fractions such as water are also removed from the thermoplastic resin B, and the resulting thermoplastic resin B is fed to another extruder, is melted, and is laminated with the molten thermoplastic resin A (Layer A) in a complex die or an adapter. In this procedure, the thermoplastic resin B is preferably laminated on both sides of the layer of thermoplastic resin A, in order to decrease retardation, from flow analysis upon melting. The laminate of thermoplastic resins is discharged from the die and is brought into close contact with a cooling drum to thereby yield a cast sheet. The laminate can be cast by, for example, air knife process, air chamber process, pressing roll process, liquid paraffin coating process, electro-pinning application process, and calendering, of which electro-pinning application process is typically preferred. A drum composed of chromium-plated material or stainless steel and having a surface roughness $R_{max}$ of less than or equal to 0.2 μm is preferred. The surface temperature of the drum depends on the crystallinity and adhesion to the drum of the thermoplastic resin B and on optical properties of the thermoplastic resin A, but generally falls within a range from 20°C to 180°C and preferably from 40°C to 150°C. The draft ratio (the ratio of the die aperture to the thickness of solidified film) is preferably less than or equal to 20, and more preferably less than or equal to 10, since the smaller is the draft ratio, the more optically isotropic is the resulting film. After casting, the film may be wound up and thereafter optionally subjected to further processing or may be subjected directly to further processing.

For example, on the thermoplastic resin film obtained by a process embodying the present invention, a gas barrier layer, hard coat layer, and/or readily-adhesive layer may be formed according to necessity, and a transparent electrode may be formed thereon to thereby yield a substrate of a liquid crystal display device. Typically, a silicon oxide layer, then (if desired) a colour filter layer and then an indium tin oxide layer are formed on the hard coat layer.

The film may be wound up and unwound between formation of each of the abovementioned layers as desired. Alternatively the film may pass directly from one layer forming stage to another.

Each of the additional gas barrier layer, hard coat layer and/or adhesive layer may be applied to both surfaces of a Layer A of thermoplastic resin A or such additional layer(s) may be applied to one side only of each of two sub-layers $A^1$ and $A^2$ to form respective plies which are bonded together to form a two-ply laminate in which sub-layers $A^1$ and $A^2$ together constitute a Layer A.

After the formation of these layers, the resulting laminate may be cut into a sheet. Especially for preparation of a film embodying the first aspect of the invention, but also, when desired, for preparation of a laminate embodying the third aspect of the invention, the sheet is typically preferably aged at a temperature lower than or equal to the glass

transition temperature under an appropriate load in the above manner, for avoiding curling, for relaxing molecular orientation or for improving thermal dimensional stability.

[Methods of Measuring Physical Properties and Methods of Evaluation Thereof]

The physical properties (characteristics) of films embodying the present invention were measured and evaluated by the following methods.

(1) Retardation

A sample film was placed in a polarizing microscope equipped with crossed Nicol using the sodium D-line (589 nm) in such a manner that the plane of the film was perpendicular to the optical axis, and the retardation Rd caused by birefringence n of the sample film was determined from the compensation of a compensator.

(2) Surface Roughness

The center-line-average height (roughness) Ra was determined using a three-dimensional surface roughness tracer (available from Kosaka Laboratory Ltd., under the trade name of ET-30 HK). The measuring condition was as follows. The surface roughness was defined as the mean of 20 measurements.

Stylus tip radius: 2 μm
Stylus load: 16 mg
Measured area: 0.3 $mm^2$
Cut-off: 0.25 mm

(3) Laminate Thickness and Film Thickness

A sample laminated film was peeled off into individual layers, and the thickness of the individual layers was measured with a dial gauge.

(4) Intrinsic Viscosity

The melt viscosity of a sample was determined in o-chlorophenol at 25°C, and the intrinsic viscosity was calculated from the melt viscosity according to the following equation:

$$\eta_{sp}/C = [\eta]+2K[\eta]C$$

wherein $\eta_{sp}$ =[(viscosity of solution)/(viscosity of solvent)]-1; C (g/100 ml) is the weight of dissolved polymer in 100 ml of the solvent; and K is the Huggins constant (0.343). The viscosity of solution and the viscosity of solvent were determined using an Ostwald viscometer.

(5) Glass Transition Temperature and Enthalpy Relaxation Temperature

About 5 mg of a sample was placed on an aluminum pan to yield a test piece, and the test piece was held at 300°C for 5 minutes and was quenched in liquid nitrogen, and the glass transition temperature and the enthalpy relaxation temperature were determined at a temperature rising rate of 20°C/minute, using a differential scanning colorimeter (DSC) and a data analyzer (both available from Seiko Instruments Inc., under the trade names of "RDC 220" and "SSC/5200", respectively).

The glass transition temperature was defined as the midpoint temperature during glass transition, and the enthalpy relaxation temperature was defined as the temperature of the peak of enthalpy relaxation. The enthalpy relaxation magnitude was calculated from the peak area of enthalpy relaxation.

(6) Thermal Dimensional Stability (Thermal Dimensional Changing Temperature)

Using a thermomechanical analyzer (TMA), a sample was raised in temperature from 30°C to 300°C at a rate of 20°C/min., and a plot of temperature (abscissa) versus dimensional change (ordinate) was made, and the thermal dimensional changing temperature was defined as the point at which the plot deviates from a straight line at or below

the glass transition temperature.

(7) Amount of Curling

In a sample film 300 mm times 300 mm size and 0.4 μm thick, the amount of curling was evaluated as O (good) when the curling (warpage) was less than or equal to 1 mm, and as X (poor) when the curling was more than 1 mm.

(8) Resistance of Transparent Electrode

A cured film 1 μm thick composed of a bisphenol A type epoxy resin and a Si particle (1:1) was formed on a thermoplastic resin film, and a $SiO_2$ film 60 nm thick was formed thereon by the high frequency discharge sputtering, and a transparent conductive film mainly composed of indium tin oxide (ITO) 100 nm thick was formed by direct current magnetron sputtering under the following conditions.

The resistance was determined at room temperature using a Loresta MCP-TESTER-EP (available from Mitsubishi Chemical Corporation).

Target material: ITO ($SnO_2$: 10 wt.%)
Supplied gas in sputtering: Ar and $O_2$
Degree of vacuum in sputtering: 2.0 x $10^{-3}$ Torr
Supplied power: 1.5 kW
Substrate temperature: 120°C
Sputtering rate: 10 nm/minute

(9) Irregularity of Film Thickness

The thickness of a sample film 30 mm wide and 10 m long sampled in the longitudinal direction of a film was continuously measured, using a film thickness tester (available from Anritsu Corporation, under the trade name of "KG 601A"). The sample film was transferred at a rate of 3 m/minute in the measurement. The irregularity of thickness was determined according to the following equations:

$$R = T_{max} - T_{min}$$

$$\text{Irregularity of thickness (\%)} = [R/T_{ave}]x100$$

where $T_{max}$ is the maximum (μm) of the thickness; $T_{min}$ is the minimum (μm) of the thickness; and $T_{ave}$ is the average thickness (μm) in the film sample 10 m long.

(10) Thermal Expansion Coefficient α

With reference to ASTM D696, a sample strip 5 mm wide was placed in a constant-load tension tester in a thermo-hygrostat at a chuck distance of 150 mm long, and the sample was raised in temperature from 30°C to 200°C at a temperature rising rate of 2°C/minute at a relative humidity of 65%, and in this procedure, the thermal expansion coefficient ($10^{-6}$/°C) was defined as the average slope of the deformation amount. The range of the temperature was set in a range excluding the transition temperature.

(11) Oxygen Permeability

The oxygen permeability was determined at 23°C at a relative humidity of 0% using an apparatus "OX-TRAN 2/20" (available from MOCON), according to the method described in ASTM D3985, and was indicated in cc/$m^2$·day·sheet.

(12) Water Vapor Permeability

The water vapor permeability was determined at 40°C at a relative humidity of 90% using an apparatus "PERMATRAN-WIA" (available from MOCON), according to the method described in Japanese Industrial Standards (JIS)

K7129B, and was indicated in g/m$^2$·day·sheet.

(13) Light Transmittance

The total light transmittance of visible light in a wavelength range of from 300 to 700 nm was determined using a spectrophotometer (available from Hitachi, Ltd., under the trade name of "U-3410"), and the light transmittance was defined as the light transmittance at a wavelength of 550 nm.

(14) Warpage

The warpage was determined according to the method described in JIS K6911.

(15) Surface Resistance

The resistance between a main electrode and a guard electrode was determined at 25°C at a relative humidity of 65% at an applied voltage of 100V using a digital ultra-high resistance microammeter (available from Advantest Corporation, under the trade name of "R8340A") with a three-terminal electrode. In this procedure, a counter electrode was grounded. The surface resistance was indicated in Ω/□.

(16) Abrasion Resistance

The abrasion resistance was evaluated by the ease of formation of scuff on the surface of a sample caused by #1000 steel wool abrasion.

(17) Pencil Hardness

A sample film was scratched by pencils of different hardness at an angle of 90 degrees under a load of 1 kg according to the method described in JIS K5400, and in this procedure, the pencil hardness was defined as the minimum hardness of the pencil which caused a scratch.

Embodiments of the present invention will now be illustrated in more detail with reference to the following Examples and comparative Examples.

EXAMPLE 1

As the thermoplastic resin, an alicyclic polyolefin (available from Nippon Zeon Co., Ltd., under the trade name of "ZEONOR"; glass transition temperature: 163°C) was dried at 130°C in vacuum for 4 hours, and was fed to an extruder A and was melted at 280°C.

As the thermoplastic resin B, poly(ethylene terephthalate) having an intrinsic viscosity of 1.4 dl/g was dried at 180°C in vacuum for 6 hours, was fed to an extruder B and was melted at 280°C, and the molten thermoplastic resin B was laminated in an adapter on both sides of the thermoplastic resin A fed from the extruder A to yield a three-layer laminate (thermoplastic resin B/thermoplastic resin A/thermoplastic resin B), and was then discharged from a die to yield a molten sheet. The molten sheet was brought into close contact with a chromium-plated roll held at 70°C and was cooled and solidified to thereby yield a laminated film having a lamination thickness ratio (B/A/B) of 50 µm/400 µm/50 µm. Next, the thermoplastic resin Layer B was peeled off at a peel force of 10 g/cm and the resulting Layer A was aged at 145°C for 24 hours. The properties of the resulting film composed of the thermoplastic resin A are shown in Table 1.

EXAMPLE 2

A film composed of the thermoplastic resin A was prepared in the same manner as in Example 1, except that the lamination ratio was changed to that indicated in Table 1, a thermoplastic resin B having an intrinsic viscosity of 1.0 dl/g was used, and the film was aged at 145°C for 48 hours. The properties of the resulting film composed of the thermoplastic resin A are shown in Table 1.

COMPARATIVE EXAMPLE 1

A film composed of the thermoplastic resin A was prepared in the same manner as in Example 1, except that the film was not aged. The properties of this film are shown in Table 1.

EXAMPLE 3

As the thermoplastic resin A, an alicyclic polyolefin (available from Nippon Zeon Co., Ltd., under the trade name of "ZEONOR"; glass transition temperature: 163°C) was dried at 130°C in vacuum for 4 hours, and was fed to an extruder A and was melted at 280°C.

As the thermoplastic resin B, poly(ethylene terephthalate) having an intrinsic viscosity of 1.4 dl/g was dried at 180°C in vacuum for 6 hours, was fed to an extruder B and was melted at 280°C, and the molten thermoplastic resin B was laminated in an adapter on both sides of the thermoplastic resin A fed from the extruder A to yield a three-layer laminate (thermoplastic resin B/thermoplastic resin A/thermoplastic resin B), and was then discharged from a die to yield a molten sheet. The molten sheet was brought into close contact with a chromium-plated roll held at 70°C and was cooled and solidified to thereby yield a laminated film having a lamination thickness ratio (B/A/B) of 50 μm/400 μm/50 μm.

Next, Layer B was peeled off from one side of the laminated film, and the surface of the resulting Layer A was subjected to corona discharge treatment, and a reactive vapor deposition layer composed of alumina was formed thereon as a transparent vapor deposition layer, and a gas barrier layer was formed on the vapor deposition layer using a coating composition. The coating composition was a water-alcohol dispersion containing 45% by weight of poly(vinyl alcohol), 55% by weight of spherical colloidal silica sol (silica solid content: 10% by weight) having an average particle size of 13 nm, and acetylacetonatoaluminium as a crosslinking agent. The applied coating composition was cured at 150°C to form a gas barrier layer 1 μm thick, and the film was then wound around a roll.

Additionally, after unwinding, a hard coat layer was formed on the gas barrier layer. Specifically, a composition containing 30% by weight of an acrylic resin and 70% by weight of spherical colloidal silica having an average particle size of 45 nm was applied on the gas barrier layer and was cured by ultraviolet ray (UV) to yield a hard coat layer 2 μm thick.

A gas barrier layer and a hard coat layer were successively formed on the other side of Layer A in the same manner as above after peeling off Layer B, to thereby yield a five-layer structure of hard coat layer/gas barrier layer/Layer A (thermoplastic resin A)/gas barrier layer/hard coat layer. The resulting laminate was cut into sheets 300 times 300 mm size, and 500 plies of the sheets were laminated to yield a multi-sheet laminate, and this laminate was aged at 145°C under a load for 12 hours. The respective sheets were then separated. The properties of the resulting fine-layer laminate film are shown in Table 1. The glass transition temperature, measured for the laminate approximates closely with that of the Layer A above.

Table 1

| | Lamination ratio (B/A/B) (μm) | Glass transition temperature (°C) | Retardation (nm) | Enthalpy relaxation temperature (°C) magnitude of relaxation (kJ/mol) | Surface roughness (nm) | Thermal dimensional changing temperature (°C) | Amount of curling (mm) |
|---|---|---|---|---|---|---|---|
| Example 1 | 50/400/50 | 166 | 0.5 | 175<br>0.35 | 25 | 180 | O(0) |
| Example 2 | 10/200/10 | 168 | 1.5 | 178<br>0.45 | 35 | 170 | O(0) |
| Example 3 | 50/400/50 | 166 | 0.5 | 175<br>0.35 | 25 | 183 | O(0) |
| Comp. Ex. 1 | 50/400/50 | 166 | 8 | -<br>0 | 60 | 145 | X(3) |

EXAMPLE 4

As the thermoplastic resin A, an alicyclic polyolefin (available from JSR, under the trade name of "ARTON"; intrinsic viscosity: 0.67 dl/g, glass transition temperature Tg: 171°C) was dried in a conventional manner and was fed to a tandem melt extruder of a diameter 250 mm, and was melted at 320°C. Separately, as the thermoplastic resin B to be laminated on and peeled off from the thermoplastic resin A, a poly(ethylene terephthalate) resin having an intrinsic viscosity of 1.25 dl/g and a glass transition temperature Tg of 70°C was dried in a conventional manner, was fed to an melt extruder of a diameter 65 mm and was melted at 280°C. The two molten resins were respectively filtered through a filter to remove foreign substances of 15 μm or more, and were laminated with each other in a lamination adapter to thereby yield a three layer structure of B/A/B, and the resulting laminate was extruded from a T-die of a ruling pen shape 2200 mm wide into a sheet on a cast drum at a distance of 50 mm from the die. In this procedure, the laminate was wound at a rate of 30 m/minute in close contact around a mirror-finished chromium-plated drum (drum diameter: 1800 mm, surface maximum roughness Rt: 0.1 μm) held at 60°C using an air chamber to thereby cool and solidify the resins. The laminate was discharged and was wound in such a manner that the flowing direction of the molten fluid (molten laminate) in the land unit of the die coincided with the winding direction of the molten laminate as much as possible. Specifically, a sloped die at an angle of 30 degree with respect to the horizontal line was used.

The above prepared cast film had a three layer structure composed of 30 μm/200 μm/30 μm and had a total thickness of 260 μm. This cast film was low in irregularity of thickness as of less than or equal to 2% in the longitudinal direction and in the widthwise direction, and had satisfactorily uniform thickness, since it exhibited no irregularity of thickness of 3 to 10 Hz as determined by frequency analysis of the irregularity of thickness. Additionally, the film was an amorphous sheet having satisfactory flatness without surface defects such as craters or die lines, and its edges had no variation in width, and the film was transparent and completely amorphous and had satisfactory casting property.

Layer B was peeled off from one side of the three-layer film, and the film surface of Layer A composed of the thermoplastic resin A was subjected to corona discharge treatment, and a gas barrier coating composition was applied thereon and was cured at 150°C to thereby yield a gas barrier coating 1 μm thick, and the resulting laminate was wound around a roll. The gas barrier composition was a water-methanol dispersion containing 45% by weight of poly(vinyl alcohol), 55% by weight of a spherical colloidal silica having an average particle size of 13 nm, and acetylacetonatoaluminium as a crosslinking agent and catalyst.

A hard coat composition was further applied onto the gas barrier layer, and water was removed by drying, and the layer was cured by UV to thereby yield a hard coat layer 2 μm thick, and the resulting laminate was wound around a roll. The hard coat composition contained 30% by weight of an acrylic resin, and 70% by weight of a spherical colloidal silica having an average particle size of 45 nm.

The resulting three-layer laminated film was composed of a gas barrier layer G and a hard coat layer H successively formed on one side of a film of the thermoplastic resin A, and Layer B was peeled off from the side of this film not coated with the layers G and H, and the resulting exposed surface of Layer A was subjected to continuous corona discharge treatment, and two plies of the treated surfaces were overlapped with each other at 180°C while evacuating the air by nip pressure to thereby yield a six-layer two-ply laminate composed of H/G/A/A/G/H. The two-ply laminate was cut into sheets 300 times 400 mm size. Next, 500 plies of the sheets were laminated to yield a multi-sheet laminate, and the laminate was heated and pressed at 230°C to thereby improve flatness and adhesion between Layers A. The respective sheets were then separated from one another.

In the resulting two-ply, multi-layer laminate, the thermal expansion coefficients α were 55 x $10^{-6}$/°C in Layer A, 20 x $10^{-6}$/°C in Layer G, and 12 x $10^{-6}$/°C in Layer H, and this laminate had a gradient structure in thermal expansion coefficient.

A silicon oxide layer 0.05 μm thick was initially formed on Layer H of the multilayer laminate, and then an indium tin oxide (ITO) layer 0.2 μm thick was formed on the silicon oxide layer using a sputtering apparatus at a substrate temperature of 200°C. The formed ITO film had a surface resistance of 15 Ω/□. The resulting multilayer laminate was not curled and the ITO film exhibited no defects such as cracks or wrinkles.

The above-prepared multilayer laminate can be used as a substrate for mobile phone display screen, personal computer display screen, and other liquid crystal display devices, and is specifically useful in the application for color display in large-screen and other applications in which high optical properties are required.

EXAMPLE 5

A three-layer laminated sheet composed of B/A/B was prepared in the same manner as in Example 4, except that the thickness of Layer A was changed to 400 μm instead of 200 μm. Layers B were then peeled off from the both sides of the sheet, and a gas barrier layer G and a hard coat layer H were successively laminated on the both sides of exposed Layer A, and the edges were knurled and the laminate was wound around a roll. The resulting laminate had a gradient structure in thermal expansion coefficient α as in Example 4. The laminate was then cut into sheets,

and silicon oxide and ITO were sputtered thereon in the same manner as in

Example 4.

The resulting multilayer laminate had satisfactory optical properties.

COMPARATIVE EXAMPLE 2

An ITO film was formed on a laminate in the same manner as in Example 4, except that the laminate had neither gas barrier layer G nor hard coat layer H, and ITO was directly sputtered onto Layer A. The resulting ITO film had wrinkles and cracks, and the substrate was curled, and the laminate could not be used in optical applications. This is probably because the laminate did not have a gradient structure in thermal expansion coefficient.

EXAMPLE 6

As the thermoplastic resin A, an alicyclic polyolefin (available from Nippon Zeon Co., Ltd., under the trade name of "ZEONOR"; glass transition temperature of: 165°C) was dried in vacuum in a conventional manner to remove moisture and oxygen, and the resin was fed to a vacuum extruder 150 mm in diameter and was melted at 285°C. The atmosphere in the vacuum extruder was replaced with nitrogen from a material hopper to the extruder. Separately, a mixture (apparent glass transition temperature Tg: 130°C) was used as the thermoplastic resin B to be laminated on and peeled off from the thermoplastic resin A, which mixture comprised 30% by weight of a poly(ethylene terephthalate) resin (intrinsic viscosity: 0.65 dl/g, glass transition temperature Tg: 70°C) and 70% by weight of a polycarbonate resin (glass transition temperature Tg: 150°C). The thermoplastic resin mixture B was dried in vacuum in a conventional manner, was fed to a melt extruder 65 mm in diameter and was melted at 280°C. The thermoplastic resins A and B were respectively filtered through a filter to remove foreign substances of 15 μm or more, and were laminated in a die to yield three layers of B/A/B, and the laminate was extruded from a T-die of a ruling pen shape 1200 mm wide onto the top of a cast drum at a distance of 50 mm from the die. The T-die was set so that the resins flowed in the horizontal direction. The flowing direction of the resins in the die land unit formed an angle of 0 degree with respect to the molten resin sheet. In this procedure, to improve adhesion between the drum and the resin sheet, the resin sheet was brought into close contact with the mirror-finished chromium-plated drum (drum diameter: 1800 mm, surface maximum roughness Rt: 0.1 μm) held at 140°C from the grounding point at a rate of 30 m/minute using an air chamber to thereby cool and solidify. An air knife was used at both edges to further improve adhesion.

The above-prepared three-layer cast film had a thickness of 460 μm composed of 30 μm/400 μm/30 μm. The irregularities of thickness in the whole laminate and in Layer B were small of less than or equal to 3% both in the longitudinal direction and widthwise direction. Additionally, Layer A exhibited no irregularity of thickness at 3 to 10 Hz as determined by frequency analysis, and Layer B had satisfactorily uniform thickness and good flatness. The resulting Layer A had no surface defects such as craters and die lines, had a retardation of 3 nm and was a completely isotropic amorphous sheet 400 μm thick. The sheet exhibited no variation in width at its edges, and had a light transmittance of equal to or more than 90% in a range of from 400 to 700 nm, and was transparent and completely amorphous and had satisfactory optical isotropy.

Layer B was peeled off from one side of the three-layer film, and the surface of the exposed Layer A was subjected to plasma discharge treatment, and a gas barrier composition was applied thereon and was cured at 150°C to thereby form a gas barrier layer 1 μm thick, and the resulting laminate was wound around a roll. As the gas barrier layer, a reactive vapor deposition layer composed of aluminum oxide (alumina) was formed as a transparent vapor deposition layer, and a gas barrier composition was applied on the transparent vapor deposition layer. The gas barrier composition was a water-methanol dispersion containing 45% by weight of a poly(vinyl alcohol), 10% by weight of a spherical colloidal silica having an average particle size of 13 nm, and acetylacetonatoaluminium as a crosslinking agent and catalyst.

After unwinding, a hard coat composition was further applied onto the gas barrier layer, and water was removed by drying, and the layer was cured by UV to thereby yield a hard coat layer 2 μm thick. The hard coat composition contained 30% by weight of an acrylic resin and 70% by weight of a spherical colloidal silica having an average particle size of 45 nm.

The resulting three-layer laminated film was composed of a gas barrier layer G and a hard coat layer H successively formed on one side of Layer A, and Layer B was then peeled off from the side of this film not coated with the layers G and H. A gas barrier layer and a hard coat layer were successively laminated on the exposed surface of Layer A after peeling off Layer B to thereby yield a multilayer laminate composed of five layers, H/G/A/G/H. The multilayer laminate was cut into sheets 300 times 400 mm size. Next, 500 plies of the sheets were laminated to yield a multi-sheet laminate, and the laminate was aged at 160°C under an appropriate load for 10 hours. The resulting multilayer laminate had a glass transition temperature Tg of 180°C (which approximates closely with the glass transition temperature of the thermoplastic resin Layer A alone), a retardation of less than or equal to 1 nm, a thermal expansion coefficient $\alpha$ of 30 ppm/°C as determined at a relative humidity of 65% at temperatures ranging from 23°C to 140°C, and a humidity expansion coefficient of 0.3 ppm/% as determined at 30°C at relative humidity ranging from 30 to 80%, a center-line-average height (surface roughness) Ra of 2 nm, a Young's modulus of 200 $kg/mm^2$, an oxygen permeability of 0.1 $cc/m^2 \cdot day$, a water vapor permeability of 0.2 $g/m^2 \cdot day$, and a light transmittance of equal to or more than 92%.

On Layer H of the multilayer laminate, a silicon oxide layer 0.05 μm thick and then a color filter RGB substrate were successively laminated, and an ITO layer 0.2 μm thick was laminated thereon using a known sputtering apparatus at a substrate temperature of 200°C. The resulting ITO film had a surface resistance of 15 Ω/□. The multilayer laminate was not curled, and the ITO film had no defects such as cracks and wrinkles.

The above-prepared multilayer laminate having satisfactory properties can be used as a substrate for mobile phone display screen, personal computer display screen, and other liquid crystal display devices, and is specifically useful in the application for color display in large-screen and other applications in which high optical properties are required.

COMPARATIVE EXAMPLE 3

A sheet 400 μm thick was prepared in the same manner as in Example 6, except that the thermoplastic resin A alone was formed into a single layer without laminated surface resin B as in Example 6. The resulting sheet 400 μm thick was subjected to the measurement of retardation and observation of the surface. It was found that this sheet had a markedly higher retardation of 21 nm as compared with the retardation (3 nm) of the sheet prepared by the lamination of Layer B. Additionally, the sheet in question exhibited a multiplicity of surface defects, called "die lines", on its surface.

Industrial Applicability

The present invention can provide a thermoplastic resin film having good surface flatness, low retardation and satisfactory thermal dimensional stability. The thermoplastic resin film can be specifically advantageously used as an optical film such as a substrate of liquid crystal display device, and polarizer-protective film. The substrate of a liquid crystal display device according to the present invention has satisfactory optical isotropy, permits a transparent electrode formed thereon to have a low resistance, and has satisfactory flatness with less curling. This liquid crystal display device substrate is useful as a substrate for mobile phone display screen, personal computer display screen, and other liquid crystal display devices.

## Claims

1. A thermoplastic resin film comprising at least a thermoplastic resin A having a glass transition temperature of equal to or higher than 150°C, an enthalpy relaxation temperature of from 140°C to 200°C and an enthalpy relaxation magnitude of from 0.01 to 2.0 kJ/mol, the thermoplastic resin film having a thickness of equal to or more than 30 μm and a retardation of less than or equal to 20 nm..

2. A thermoplastic resin film according to claim 1, wherein the thermoplastic resin A is selected from alicyclic polyolefins, polycarbonates, polyarylates, polysulfones and poly(ether sulfone)s.

3. A thermoplastic resin film according to claim 1 or 2, wherein the thickness is equal to or more than 100 μm.

4. A thermoplastic resin film according to claim 3, wherein the thickness is equal to or more than 200 μm.

5. A thermoplastic resin film according to any preceding claim, wherein the retardation is less than or equal to 10 nm.

6. A thermoplastic resin film according to claim 5, wherein the retardation is less than or equal to 5 nm.

7. An optical film having, as a substrate layer, a thermoplastic resin film of claim 1.

8. Use of an optical film according to claim 7, as a substrate for a liquid crystal display.

9. A process for producing a thermoplastic resin film, which process comprises the steps of:

laminating a or a respective Layer B comprising a or a respective thermoplastic resin B on one or each respective surface of a Layer A comprising a thermoplastic resin A by melt co-extrusion, the thermoplastic resin A having a glass transition temperature of equal to or higher than 150°C;
optionally casting the resulting laminate into a film; and
peeling off the or each Layer B, thereby to yield a thermoplastic resin film.

**10.** A process according to claim 9, wherein the thermoplastic resin film produced by the step of peeling off the or each Layer B has a thickness of equal to or more than 30 μm, a retardation of less than or equal to 20 nm, an enthalpy relaxation temperature of from 140°C to 200°C and an enthalpy relaxation magnitude of from 0.01 to 2.0 kJ/mol.

**11.** A process according to claim 9 or 10, wherein the or each thermoplastic resin B is selected from polyesters and polycarbonates.

**12.** A process according to claim 9, 10 or 11 wherein the laminate is cast into a film by the application of electro-pinning.

**13.** A process according to any one of claims 9 to 12, wherein the film is aged at a temperature equal to or higher than [(the glass transition temperature) -30°C] and less than or equal to the glass transition temperature.

**14.** A process according to any one of claims 9 to 13, wherein at least one additional layer is or are formed at least on one surface of the Layer A to form a laminate, which said laminate is aged at a temperature lower than or equal to the glass transition temperature of the laminate, the laminate being optionally cut to a sheet before ageing.

**15.** A process according to claim 14, wherein at least one of a gas barrier layer and a hard coat layer is or are formed, as additional layer(s) on at least one surface of the Layer A.

**16.** A process according to claim 15, wherein each of a gas barrier layer and a hard coat layer is formed on at least one surface of the Layer A and the hard coat layer is formed over the gas barrier layer.

**17.** A process according to any one of claims 14 to 16, wherein a silicon oxide layer, then an (optional) colour filter layer and then an indium tin oxide layer are formed, as additional layers, as outermost layers of a laminate.

**18.** A process according to any one of claims 9 to 13, wherein at least one first additional layer is formed on one surface of a first sub-layer $A^1$ and at least one second additional layer is formed on one surface of a second sub-layer $A^2$ to yield first and second plies and wherein respective free surfaces of first and second sub-layers $A^1$ and $A^2$ of respective first and second plies are bonded to one another to form a two-ply laminate having a Layer A comprising sub-layers $A^1$ and $A^2$.

**19.** A process according to claim 18, wherein the respective free surfaces of the first and second plies are bonded to one another by subjecting at least one of the respective free surfaces to a surface activation treatment, bringing the respective said surfaces together to form an assembly of plies and subjecting the assembly to thermocompression.

**20.** A process according to claim 18, wherein the respective free surfaces of the first and second plies are bonded to one another by the application of an adhesive layer to at least one of the said surfaces and bringing together the said surfaces.

**21.** A process according to claim 18, wherein the respective free surfaces of the first and second plies are bonded to one another by melt-extruding, between the respective surfaces, a layer of thermoplastic resin being substantially the same as the respective thermoplastic resins $A^1$ and $A^2$ of sub-layers $A^1$ and $A^2$.

**22.** A process according to any one of claims 18 to 21, wherein the or each of the first and the or each of the second additional layers is selected from a gas barrier layer and a hard coat layer.

**23.** A process according to claim 22, wherein each of a gas barrier layer and a hard coat layer is formed on respective surfaces of the first sub-layer $A^1$ and the second sub-layer $A^2$ as respective pairs of first and second additional layers and each hard coat layer is formed over a respective gas barrier layer.

**24.** A process according to any one of claims 18 to 23, wherein respective layers of silicon oxide, then (optional)

respective colour filter layers and then respective indium tin oxide layers are formed, as respective additional layers on respective surfaces of the first sub-layer $A^1$ and the second sub-layer $A^2$.

**25.** A laminate comprising:

a Layer $A^L$ comprising a thermoplastic resin $A^L$; and, on one or each respective surface of Layer $A^L$,
a Layer C, the or each Layer C comprising a plurality of sub-layers, each sub-layer having a respective thermal expansion coefficient lower than the thermal expansion coefficient $\alpha$ of the thermoplastic resin $A^L$ of Layer $A^L$, the or each Layer C being laminated on the Layer $A^L$ in such a manner that the sub-layers of the or each Layer C have sequentially decreasing respective thermal expansion coefficients with increasing distance from the Layer $A^L$.

**26.** A laminate according to claim 25, wherein Layer C is laminated on both surfaces of the Layer $A^L$, the Layer C comprising a plurality of layers each having a thermal expansion coefficient lower than the thermal expansion coefficient $\alpha$ of the thermoplastic resin $A^L$ of Layer $A^L$.

**27.** A laminate according to claim 26, wherein Layer $A^L$ comprises a pair of sub-layers $A^{L1}$ and $A^{L2}$ of respective thermoplastic resins $A^{L1}$ and $A^{L2}$, which may be the same as or different from one another, and wherein each of the plurality of sub-layers of each respective Layer C has a respective thermal expansion coefficient less than the thermal expansion coefficient of each of the thermoplastic resins $A^{L1}$ and $A^{L2}$ of the respective sub-layers $A^{L1}$ and $A^{L2}$ of Layer $A^L$.

**28.** A laminate according to claim 27, wherein at least one of opposed surfaces of sub-layers $A^{L1}$ and $A^{L2}$ of Layer $A^L$ is surface activated, thereby allowing the sub-layers $A^{L1}$ and $A^{L2}$ to be bonded to each other at their respective said opposed surfaces by thermocompression.

**29.** A laminate according to claim 27, which additionally comprises an adhesive layer between respective opposed surfaces of sub-layers $A^{L1}$ and $A^{L2}$ of Layer $A^L$, the adhesive layer thereby bonding the respective sub-layers $A^{L1}$ and $A^{L2}$ to each other.

**30.** A laminate according to claim 27, which additionally comprises a layer of a resin being substantially the same as the respective thermoplastic resins $A^{L1}$ and $A^{L2}$ of sub-layers $A^{L1}$ and $A^{L2}$ of Layer $A^L$ and melt-extruded between the sub-layers $A^{L1}$ and $A^{L2}$ of Layer $A^L$, thereby to provide a bonded laminate.

**31.** A laminate according to any one of claims 25 to 30, wherein the thermoplastic resin of Layer $A^L$ has a glass transition temperature of equal to or higher than 150°C, an enthalpy relaxation temperature of from 140°C to 200°C and an enthalpy relaxation magnitude of from 0.01 to 2.0 kJ/mol and the laminate has a thickness of equal to or more than 30 μm and a retardation of less than or equal to 20 nm.

**32.** An optical film having, as a substrate layer, a laminate of claim 25.

**33.** Use of an optical film according to claim 32, as a substrate for a liquid crystal display.

**34.** A process for preparing a laminate, which process comprises laminating onto one or each respective surface of a Layer $A^L$ comprising a thermoplastic resin $A^L$ a Layer C, the or each Layer C comprising a plurality of sub-layers, each sub-layer having a respective thermal expansion coefficient lower than the thermal expansion coefficient lower than the thermal expansion coefficient $\alpha$ of the thermoplastic resin $A^L$ of Layer $A^L$, the or each Layer C being laminated onto the Layer $A^L$ in such a manner that the sub-layers of the or each Layer C have sequentially decreasing respective thermal expansion coefficients with increasing distance from the Layer $A^L$.

**35.** A process according to claim 34, wherein Layer C is laminated on both surfaces of the Layer $A^L$, the Layer C comprising a plurality of layers each having a thermal expansion coefficient lower than the thermal expansion coefficient $\alpha$ of the thermoplastic resin A of Layer $A^L$.

**36.** A process according to claim 34 or claim 35, wherein at least one of a gas barrier layer and a hard coat layer is or are formed, as sub-layer(s) C, on at least one surface of the Layer $A^L$.

**37.** A process according to claim 36, wherein each of a gas barrier layer and a hard coat layer is formed on at least

one surface of the Layer $A^L$ and the hard coat layer is formed over the gas barrier layer.

**38.** A process according to any one of claims 34 to 37, wherein a silicon oxide layer, then an (optional) colour filter layer and then an indium tin oxide layer are formed, as sub-layers of Layer C and as outermost layers of a laminate.

**39.** A process according to any one of claims 34 to 38, wherein at least one first layer C is formed on one surface of a first sub-layer $A^{L1}$ and at least one second layer C is formed on one surface of a second sub-layer $A^{L2}$ to yield a first and second plies and wherein respective free surfaces of first and second sub-layers $A^{L1}$ and $A^{L2}$ of respective first and second plies are bonded to one another to form a two-ply laminate having a Layer $A^L$ comprising sub-layers $A^{L1}$ and $A^{L2}$.

**40.** A process according to claim 39, wherein the respective free surfaces of the first and second plies are bonded to one another by subjecting at least one of the respective free surfaces to a surface activation treatment, bringing the respective said surfaces together to form an assembly of plies and subjecting the assembly to thermocompression.

**41.** A process according to claim 39, wherein the respective free surfaces of the first and second plies are bonded to one another by the application of an adhesive layer to at least one of the said surfaces and bringing together the said surfaces.

**42.** A process according to claim 39, wherein the respective free surfaces of the first and second plies are bonded to one another by melt-extruding, between the respective surfaces, a layer of thermoplastic resin being substantially the same as the respective thermoplastic resins $A^{L1}$ and $A^{L2}$ of sub-layers $A^{L1}$ and $A^{L2}$.

**43.** A process according to any one of claims 39 to 42, wherein each of a gas barrier layer and a hard coat layer is formed on respective surfaces of the first sub-layer $A^{L1}$ and the second sub-layer $A^{L2}$ as respective pairs of first and second layers C and each hard coat layer is formed over a respective gas barrier layer.

**44.** A process according to any one of claims 39 to 42, wherein respective layers of silicon oxide, then (optional) respective colour filter layers and then respective indium tin oxide layers are formed, as respective layers C on respective surfaces of the first sub-layers $A^{L1}$ and the second sub-layers $A^{L2}$.

**45.** A process according to any one of claims 34 to 44, which includes the preliminary step of preparing the thermoplastic resin layer $A^L$ by laminating a or a respective Layer B comprising a or a respective thermoplastic resin B on one or each respective surface of a Layer A comprising a thermoplastic resin A by melt co-extrusion, the thermoplastic resin A having a glass transition temperature of equal to or higher than 150°C;

optionally casting the resulting laminate into a film; and
peeling off the or each Layer B, thereby to yield a thermoplastic resin film $A^L$.